# EUROPEAN PATENT APPLICATION

(11) **EP 4 682 616 A1**
(43) Date of publication of application: **21.01.2026**
(21) Application number: 24275086.7
(22) Date of filing: 19.07.2024
(51) Int. Cl.: G02B 27/01, A42B 3/22

(54) **HEAD WORN ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is disclosed a head worn assembly comprising: a wearable frame; a selectively attachable visor assembly for mounting at the frame; a magnetic fastener distributed between the frame and visor assembly, and biased to hold the visor assembly at the frame; the visor assembly comprising at least two profiled features, the frame comprising a physically reciprocating feature for each of the at least two profiled features, the each of the at least two profiled features stably occupying its respective reciprocating feature when the frame and visor assembly are in an operational alignment condition.

## Description

### FIELD

The present invention relates to a head worn assembly and a head worn display system comprising such a head worn assembly.

### BACKGROUND

Typically, optical elements in a head worn display system need to be positioned with appropriately high precision and accuracy. Thus prescribed optical tolerances can be met.

During assembly of optical systems, optical elements therein are arranged at suitable datum locations (e.g. a mounting ledge), and then fixed in place permanently (e.g. using an adhesive). Thus correct positioning is preserved.

Often the visors or combiners of a head worn display system are an integral part of the optical system, and so are fixed in place permanently.

### SUMMARY

According to an aspect of the present invention, there is provided a head worn assembly comprising: a wearable frame; a selectively attachable visor assembly for mounting at the frame; a magnetic fastener distributed between the frame and visor assembly, and biased to hold the visor assembly at the frame; the visor assembly comprising at least two profiled features, the frame comprising a physically reciprocating feature for each of the at least two profiled features, the each of the at least two profiled features stably occupying its respective reciprocating feature when the frame and visor assembly are in an operational alignment condition.

Each profiled feature may have the form of a protrusion and each reciprocating feature may have the form of a recess, or alternatively each reciprocating feature may have the form of a protrusion and each profiled feature may have the form of a recess.

The protrusion may extend from the respective frame or visor assembly, and taper to a point.

Further, the protrusion may extend from the surface of the respective frame or visor assembly at 80 to 90 degrees.

Still further, the protrusion may comprise a curved surface, monotonically tapering to the point.

Still further, the protrusion may comprise a spherical dome surface, or more particularly a hemispherical surface.

The magnetic fastener may comprise a permanent magnet and a corresponding ferromagnetic element.

Further, the magnetic fastener may comprise a plurality of permanent magnets, each having a corresponding ferromagnetic element.

The magnetic fastener may be stably aligned with the corresponding ferromagnetic element when the frame and the visor assembly are in the operational alignment condition.

The permanent magnet may be housed at the frame, and the ferromagnetic element may be housed at the visor assembly.

The head worn assembly may comprise at least three profiled features and three corresponding reciprocating features, a first profiled feature being offset from the axis defined between the second and third profiled features, such that when in the operational alignment condition, the combined abutment of the profiled features at their corresponding reciprocating features restricts substantially all translation or rotation of the visor assembly relative to the frame.

The first profiled feature may be at a first distal portion of the visor assembly and the third profiled feature may be at a second distal portion of the visor assembly, the first distal portion being different to the second distal portion.

The visor assembly may comprise a carrier member bearing the at least two protrusions. Further, the carrier member may comprise or be formed from a ferromagnetic material and as such provide the ferromagnetic element.

The visor assembly may comprise a first eye and/or second eye combiner for presenting imagery to a wearer as an augmented reality display.

The head worn assembly may further comprise an image display system for generating and relaying predetermined imagery to the visor assembly such that when the frame and visor assembly are in the operational alignment condition, the wearer is presented with the predetermined imagery.

The head worn assembly may further comprise a tracking system. In particular, the tracking system may comprise an inertial measurement unit.

According to a further aspect of the invention there is provided a head worn display system comprising a head worn assembly according to the first aspect.

According to a further aspect of the invention there is provided a method of mounting a selectively attachable visor assembly at a wearable frame, a magnetic fastener being distributed between the frame and visor assembly and biased to hold the visor assembly at the frame, the visor assembly comprising at least two profiled features, the frame comprising a physically reciprocating feature for each of the at least two profiled features, the each of the at least two profiled features stably occupying its respective reciprocating feature when the frame and visor assembly are in an operational alignment condition, the method comprising guiding the visor assembly onto the frame such that the at least two profiled features are introduced to and stably occupy the respective reciprocating features and thereby establishing an operational alignment condition.

### BRIEF DESCRIPTION OF THE FIGURES

Embodiments of the invention will now be described by way of example only with reference to the figures, in which:
Figure 1 shows a front view of a visor assembly and a wearable frame for a head worn assembly;
Figures 2a, 2b and 2c show various profiled features and reciprocating features for the head worn assembly;
Figure 3 shows an image display system for a head worn display system;
Figure 4 shows a partially assembled head worn display system; and
Figure 5 shows a head worn display system comprising the head worn assembly.

### DETAILED DESCRIPTION

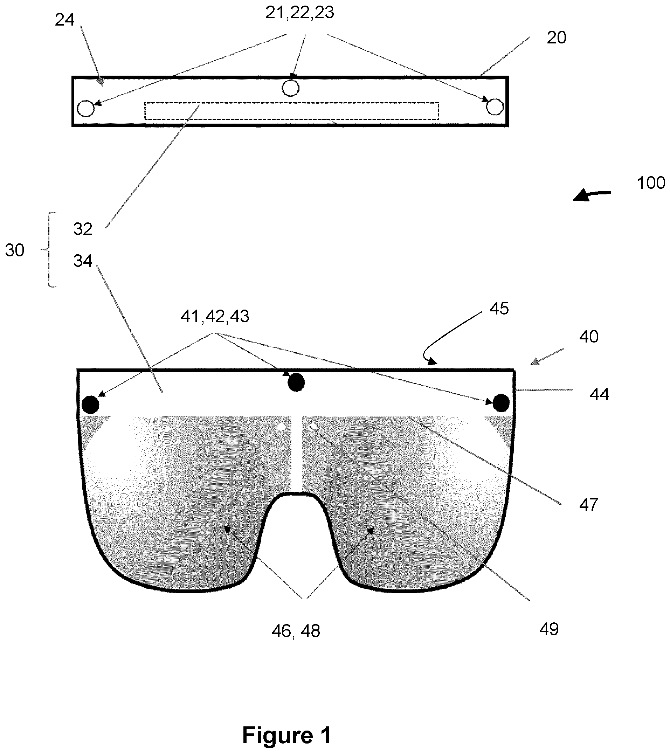

Referring to Figure 1, a head worn assembly 100 comprises a wearable frame 20 and a selectively attachable visor assembly unit or visor 40. The visor assembly 40 may be attached to the frame 20, in an operation alignment condition.

The wearable frame 20 is suitable for being worn at a user's face. For example the frame may be part of a helmet or other headwear.

The frame 20 has a visor-adjacent surface 24 at the front, and provided at this surface 24 is a set of profiled features 21, 22, 23.

Within the set of profiled features, a first feature 21 is at a first distal portion of the frame 20, and a third feature 23 is at a second distal portion of the frame 20. The first and second distal portions are different and at opposite ends of the elongate structure defined by the frame 20. A second feature 22 is substantially at the middle of the frame 20.

The visor assembly 40 is suitable for mounting at the wearable frame 20. Further, the visor assembly 40 is suitable for mounting at the frame 20 such that when the frame 20 is worn by the user, the visor assembly 40 sits in front of the users eyes.

The visor assembly 40 comprises a carrier member 44, which is a structural member to which is mounted a first combiner 46, and a second combiner eye piece 48. Each combiner is mounted to lie against a ridge 47 defined by the structural member 44, and to be further held at the surface of the carrier member 44 by pin or screw means through combiner hole 49.

Also provided at the carrier member 44 is a set of profiled features 41, 42 and 43. These extend from a frame-adjacent surface 45 on the back of the visor assembly 40.

Within the set of profiled features, a first feature 41 is at a first distal portion of the visor assembly 40, and a third feature 43 is at the second distal portion of the visor assembly 40. The first and second distal portions are different and at opposite ends of the elongate structure defined by the carrier member 44. A second feature 42 is substantially at the middle of the visor assembly 40.

A magnetic fastener 30 is distributed between the frame 20 and the visor assembly 40. The magnetic fastener 30 comprises a magnetic element 32 located at the frame 20, and a ferromagnetic element 34 located at the visor assembly 40.

The magnetic fastener 30 is biased to retain the visor assembly 40 at the frame 20.

In this example, the magnetic element 32 is a single permanent magnet which is fixed into the structure of the frame 20, and is conformal with or set back from a visor assembly-adjacent surface 24 of the frame 20. The ferromagnetic element 34 is embodied by the structure of the visor assembly 40 itself as in this example the carrier member 44 is formed from steel or another suitable iron alloy. As such the carrier member 44 is not only a structural element of the visor assembly, but is also the ferromagnetic element 34.

In alternative arrangements the magnetic element may be mounted at the visor assembly 40, with the ferromagnetic element mounted at the frame 20.

In further alternative arrangements, there may be a plurality of magnetic elements and/or ferromagnetic elements. In such circumstance, all of the plurality of magnetic elements could be mounted at the same unit (visor or frame) and all ferromagnetic elements mounted at the other. Alternatively, magnetic elements could be at the visor assembly, and corresponding reverse polarity magnetic elements could be at the frame.

A set of paired profiled features are distributed between the frame 20 and the visor assembly 40. These define a physical interface for facilitating correct and repeatable alignment between the frame and visor when attached.

In particular, at the visor assembly 40 there is provided a first 41, second 42 and third 43 profiled feature. At the frame 20 there is provided a first 21, second 22, and third 23 reciprocating profiled feature.

The pattern of distribution across the visor assembly 40 of the profiled features set 41, 42, 43 is equivalent to the pattern of distribution across the frame 20 of the reciprocating features set 21, 22, 23. As such the profile features and the reciprocating features can be brought into correspondence, that is to be say they can all be lined up simultaneously.

The shape of a given profiled feature on the visor assembly 40 and the shape of the corresponding reciprocating feature of the frame 20, are such that the profiled feature fits within the reciprocating feature.

Thus, once in correspondence, all the profiled features can be inserted or mated into respective reciprocating features simultaneously. Thereby an operational alignment condition is achieved.

Adjacent surfaces of the visor assembly 40 (e.g. 45) and the frame 20 (e.g. 24), which are not the profiled/reciprocating features are arranged to be substantially conformal; thus the fit is not obstructed.

The pattern of distribution of the profiled features is triangular. That is to say that for three given profiled features, each one is offset from the axis running between the other two profiled features. Such a distribution can inhibit rotation of the visor assembly 40 relative to the frame 20, at three axes, once in operational alignment.

The shaping of a profiled feature and its reciprocal feature is such that once inserted, the fit inhibits translation of the visor relative to the frame at that feature pair. More specifically the fit inhibits translation in two dimensions: up-down and left-right.

Given the triangular pattern of the feature set, the inhibition against translation at each pair, and the retaining force applied by the magnetic fastener 30, the attachment tends to prevent relative movement between the frame 20 and the visor assembly 40 across all six degrees of freedom.

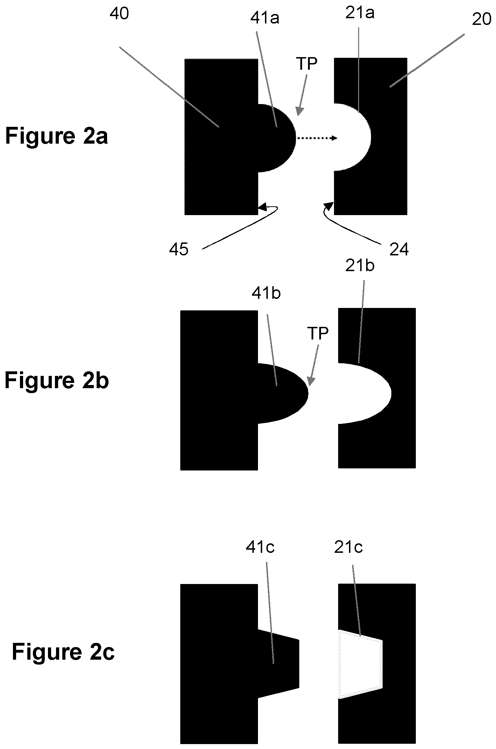

Referring to Figures 2a, 2b and 2c, various forms of profiled feature and reciprocating profiled feature are shown.

Referring to Figure 2a a hemispherical protrusion 41a extends from the surface of the visor assembly 40. The hemispherical protrusion 41a extends from the surface at 90 degrees and tapers monotonically to point TP.

This hemispherical protrusion 41a has a reciprocating cavity 21a formed at the frame 20.

Accordingly, it can be appreciated how the profiled feature 41a could be fitted into reciprocating feature 21a to limit translation between the relevant bodies they are associated with.

Where the protrusions are hemispherical, they may be formed using metal (e.g. a steel) ball bearings and as such can provide a repeatable mate between the protrusions and their reciprocating cavities due in part to the precision with which ball bearings can be manufactured, and due to the integrity/strength of the metal (e.g. a steel) which forms them. Such a repeatable mate may tend to minimise recalibration of adjacent systems which rely on consistent relative positioning of the visor assembly and the frame. Such reliance on consistency may occur where visors are frequently detached and reattached, and/or swapped out for equivalent parts.

Figure 2b shows a spheroidal protrusion 41b, more specifically a truncated oblate spheroid protrusion, extending from the surface of the visor assembly 40. The spheroidal protrusion 41b extends from the surface at 90 degrees and tapers monotonically to point TP.

This spheroidal protrusion 41b has a reciprocating cavity 21b formed at the frame 20.

Accordingly, it can be appreciated how the profiled feature 41b could be fitted into reciprocating feature 21b to limit translation between the relevant bodies they are associated with.

Figure 2c shows a frusto-conical protrusion 41c extending from the surface of the visor assembly 40. The frusto-conical protrusion 41c extends from the surface at 80 degrees and tapers monotonically to plateau.

This frusto-conical protrusion 41c has a reciprocating cavity 21c formed at the frame 20.

Accordingly, it can be appreciated how the profiled feature 41c could be fitted into reciprocating feature 21c to limit translation between the relevant bodies they are associated with.

In alternative embodiments, protruding features may extend from the frame and the reciprocating cavities may be provided at the visor assembly. In yet further embodiments, a mixture of protrusion and cavities may be at the visor assembly, reciprocating with a corresponding mixture of cavities and protrusions at the frame.

Further alternative protrusions would include pyramidal forms, frusto-pyramidal forms, with optional chamfer or fillet. Indeed various higher order polygonal forms without re-entrant angles are within contemplation. Forms that taper to a plateau or a point may be easier to marry up with their reciprocal profile, as compared with non-tapering protrusions such as cylindrical protrusions. Forms of protrusion with a rounded point may be easier to move across the surface around the reciprocating cavity during alignment i.e. sharp points or plateaus may dig in or have higher coefficients of friction.

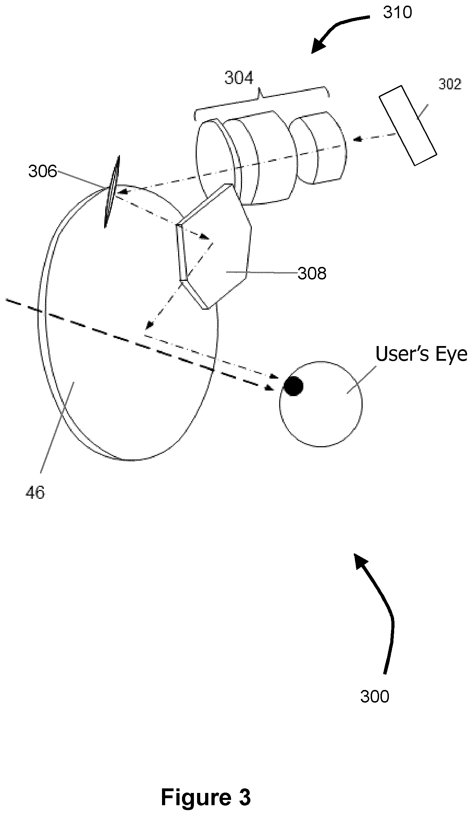

Referring to Figure 3, an image display system 300 for a first user eye may be used in combination with the head worn assembly 100.

Such an image display system 300 comprises a display source 302 for generating imagery for display to the user and an optical train 310 for conveying imagery from the display 302 to the user.

The optical train comprises a relay lens 304, a first mirror 306 and a second mirror 308, arranged to achieve suitable optical performance in a suitable spatial envelope (for a head worn device).

Further, the optical train 310 uses the combiner surface 46 (or alternatively 48) of the visor assembly 40 as a further reflector, and indeed the final reflector in the optical train 310, which directs image bearing light into the user's eye.

A representation of a ray of light, being conveyed from the image source 302, through the optical train 310 and to the user's eye, is shown as a dot-dash line.

The combiner 46 is arranged to transmit light, for example from the external environment through to the user's eye. A representation of this light is shown by the dashed line.

As such, the image display system 300 may provide the user with an augmented reality view.

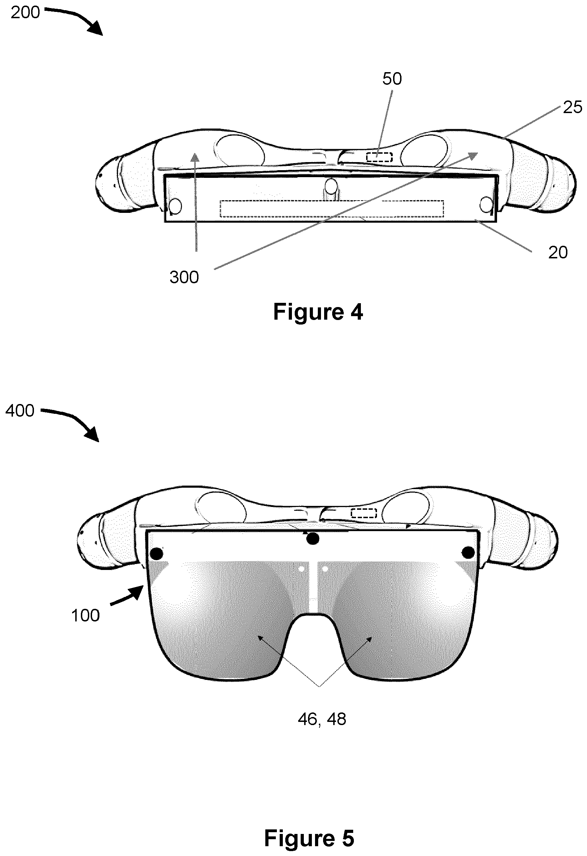

Referring to Figure 4 and 5, a pair of image display systems 300 (one for each eye) is mounted within a head worn display system frame 200.

The head worn display system frame 200 comprises frame 20 and a display system housing section 25, for housing the display systems 300. Further the HWD frame 200 comprises a tracking system 50, which in this example has the form of an inertial measurement unit (IMU).

The assembled HWD 400 comprises the HWD frame 200 and the visor assembly 40.

As the image display system 300 relies on the visor assembly 40 to convey the image to the user, and as the image display system is supported at the frame, a consistent or repeatable alignment between the visor assembly and the frame can preserve the quality of the imagery observed by the user or users of the helmet. As such it can become possible for users to repeatedly remove and reattach the visor assembly; doing so can be expected to maintain the optical quality.

IMUs are sensitive devices, and need to be calibrated prior to operational use. Even once calibrated, an IMU may need to be re-calibrated, for example if the surrounding magnetic field changes significantly.

Where the head worn assembly 100 is within a HWD 400 comprising an IMU 50, the provision of the magnetic element (e.g. permanent magnet) at the frame 20, as opposed to the visor assembly 40, can reduce the need to recalibrate the IMU. This is because the IMU will be sensitive to any changes in the magnetic field around the helmet, and there is a better opportunity to fix the magnetic element in position relative to the IMU if it is fixed into the helmet. If it were at the visor assembly, there is a possibility that either a) calibration could be done absent the visor assembly, and hence when the visor assembly and its magnet were present, the calibration would no longer be valid or b) a replacement visor assembly, as compared to the visor assembly which was used to calibrate the HWD, could have a magnet in a slightly different position or otherwise generating a slightly different field at the IMU.

The visor assembly 40 is fabricated in the present example in the following way. First the carrier member 44 is formed from steel and is machined to provide, to within suitable tolerances, a set of three datum surfaces onto which each combiner 46, 48 may be laid up in positional space: X, Y and Z,. Further, two small threaded holes are provided, one for each combiner 46, 48, to support the combiner being fixed in position

Still further, the protrusions (or cavities) are formed at the carrier member 44 at the frame-adjacent surface 45. In order to form protrusions, layers of material may be selectively machined away (e.g. by a fine CNC machine) to leave the protrusions standing proud. Alternatively, and with particular regard to where the protrusions or cavities are hemispherical, a hemispherical cavity may be machined (e.g. drilled) in the surface of the carrier member 44 which may either be left as such to form a cavity, or may have a ball bearing set and fixed therein to form the hemispherical protrusion.

Next combiners are formed and provided with a clearance hole 49 for loosely fitting the screw. Next, the formed combiners are laid up on the carrier member 44 and held loosely in position by inserting a screw through the holes 49 and into respective threaded holes in the carrier 44. Next the combiners are moved into a correct position against the datum ridge 47. Next an adhesive is applied and cured to fix the combiners in the correct position.

In alternative examples, the step of forming the protrusions or cavities in the carrier member 44 may be carried out after the fixing of the combiners , provided the integrity of the visor assembly can be maintained during such further machining.

The frame may be fabricated from aluminium, with a suitable set of machining steps to generate chambers for housing magnetic elements, and to form a suitable visor-adjacent surface 24 (including cavities or protrusions as necessary) for receiving the visor assembly.

## Claims

1. A head worn assembly (100) comprising
A wearable frame (20);
A selectively attachable visor assembly (40) for mounting at the frame (20);
A magnetic fastener (30) distributed between the frame (20) and visor assembly (40), and biased to hold the visor assembly at the frame;
The visor assembly comprising at least two profiled features (41, 42, 43), the frame comprising a physically reciprocating feature (21, 22, 23) for each of the at least two profiled features, the each of the at least two profiled features stably occupying its respective reciprocating feature when the frame and visor assembly are in an operational alignment condition.

2. The head worn assembly according to claim 1 wherein each profiled feature has the form of a protrusion (41a, 41b, 41c) and each reciprocating feature has the form of a recess (21a, 21b, 21c), or alternatively each reciprocating feature has the form of a protrusion and each profiled feature has the form of a recess.

3. The head worn assembly according to claim 2 wherein the protrusion extends from the respective frame or visor assembly, and tapers to a point (TP), and optionallywherein the protrusion extends from the surface of the respective frame or visor assembly at 80 to 90 degrees.

4. The head worn assembly according to claim 4 wherein the protrusion comprises a curved surface, monotonically tapering to the point.

5. The head worn assembly according to claim 4 wherein the protrusion comprises a spherical dome surface, or more particularly a hemispherical surface.

6. The head worn assembly according to any of the preceding claims wherein the magnetic fastener (30) comprises a permanent magnet (32) and a corresponding ferromagnetic element (34).

7. The head worn assembly according to claim 6 wherein the magnetic fastener comprises a plurality of permanent magnets, each having a corresponding ferromagnetic element.

8. The head worn assembly according to claim 6 or 7 wherein the magnetic fastener is stably aligned with the corresponding ferromagnetic element when the frame and the visor assembly are in the operational alignment condition.

9. The head worn assembly according to any of the preceding claims comprising at least three profiled features and three corresponding reciprocating features, a first profiled feature (41) being offset from the axis defined between the second (42) and third (43) profiled features, such that when in the operational alignment condition, the combined abutment of the profiled features at their corresponding reciprocating features restricts substantially all translation or rotation of the visor assembly relative to the frame.

10. The head worn assembly according to any of the preceding claims wherein the visor assembly (40) comprises a carrier member (44) bearing the at least two protrusions.

11. The head worn assembly according to any of the preceding claims wherein the visor assembly comprises a first eye (46) and/or second eye combiner (48) for presenting imagery to a wearer as an augmented reality display.

12. The head worn assembly according to any of the preceding claims further comprising an image display system (300) for generating and relaying predetermined imagery to the visor assembly such that when the frame and visor assembly are in the operational alignment condition, the wearer is presented with the predetermined imagery.

13. The head worn assembly according to any of the preceding claims further comprising a tracking system (50).

14. A head worn display system (400) comprising a head worn assembly according to any of the preceding claims.

15. A method of mounting a selectively attachable visor assembly at a wearable frame, a magnetic fastener being distributed between the frame and visor assembly and biased to hold the visor assembly at the frame, the visor assembly comprising at least two profiled features, the frame comprising a physically reciprocating feature for each of the at least two profiled features, the each of the at least two profiled features stably occupying its respective reciprocating feature when the frame and visor assembly are in an operational alignment condition,
the method comprising guiding the visor assembly onto the frame such that the at least two profiled features are introduced to and stably occupy the respective reciprocating features and thereby establishing an operational alignment condition.
